# NEUE EUROPÄISCHE PATENTSCHRIFT

(11) **EP 1 899 207 B2**
(45) Veröffentlichungstag und Bekanntmachung des Hinweises auf die Entscheidung über den Einspruch: **21.01.2015**
(45) Hinweis auf die Patenterteilung: 21.10.2009
(21) Anmeldenummer: 06763659.7
(22) Anmeldetag: 13.06.2006
(51) Int. Cl.: B61D 27/00, B60H 1/00, F24F 13/02

(54) **LUFTKANALSYSTEM FÜR FAHRZEUGE, INSBESONDERE FÜR SCHIENENFAHRZEUGE DES PERSONENVERKEHRS**
AIR DUCT SYSTEM FOR VEHICLES, IN PARTICULAR FOR RAIL VEHICLES FOR PASSENGER TRAFFIC
SYSTEME DE CONDUIT DE VENTILATION POUR VEHICULES, EN PARTICULIER POUR VEHICULES FERROVIAIRES DESTINES AU TRAFIC DE VOYAGEURS

(30) Priorität: 07.07.2005 DE 102005031912
(43) Veröffentlichungstag der Anmeldung: 19.03.2008
(73) Patentinhaber: Siemens Aktiengesellschaft, 80333 München (DE)
(72) Erfinder: HÖFLER, Werner, 47829 Krefeld (DE); WICHMANN, Rainer, 80339 München (DE)
(86) Internationale Anmeldenummer: PCT/EP2006/063129
(87) Internationale Veröffentlichungsnummer: WO 2007/006616

(56) Entgegenhaltungen:
- EP-A- 1 357 323
- CH-A5- 604 066
- DE-C1- 19 654 633
- US-A- 5 399 121

## Beschreibung

Die Erfindung betrifft ein Luftkanalsystem für Fahrzeuge, insbesondere für Schienenfahrzeuge des Personenverkehrs, mit mindestens einem Dachlüftungskanal, der einen Teil-Lüftungskanal für Warmluft und einen Teil-Lüftungskanal für Kaltluft aufweist.

Ein solches Luftkanalsystem für Fahrzeuge ist beispielsweise aus der DE 196 54 633 Cl bekannt. Ebenfalls zum Stand der Technik gehört der Offenbarungsgehalt der CH 604066 A5, der ein Lüftungskanal entnehmbar ist, welcher eine innerhalb des Lüftungskanals angeordnete Abtrennung aufweist, die derart verformbar ausgebildet oder bewegbar gehalten ist, dass der Querschnitt jedes der beiden Teil-Lüftungskanäle unter Verkleinerung des jeweils anderen Teil-Lüftungskanals vergrößerbar ist.

Bei klimatisierten Schienenfahrzeugen mit im Dachbereich montierten Klimaanlagen sind Vorrichtungen zur Luftverteilung allgemein bekannt. Bei diesen Vorrichtungen wird die behandelte Luft von der häufig auf dem Dach des Fahrzeuges angeordneten Klimaanlage mit Hilfe von Zuluftkanälen zu den Hauptlüftungskanälen geleitet, die sich zwischen dem Dach und der Innendecke des Fahrzeuges befinden. Diese Zuluftkanäle führen von den Luftauslässen des Klimagerätes zu Öffnungen, die sich in den Hauptluftkanälen befinden. Wegen der stets begrenzten Außen- und Innenmaße des Fahrzeuges ist der Raum zwischen der Unterseite des Klimagerätes, an der sich die Luftauslässe befinden, und der Oberseiten der Hauptlüftungskanäle sehr gering. Dieser geringe Raum hat zur Folge, dass die Querschnitte der Zuluftkanäle begrenzt sind und sich dadurch in der Regel hohe Strömungsgeschwindigkeiten der Luft ergeben, die wiederum eine starke Geräuschentwicklung bewirken. Dies betrifft Fahrzeuge, bei denen die Heizleistung aus dem als Aufdachgerät konzipierten Klimagerät über mindestens einen abgeteilten, längs im Dachbereich verlaufenden Kanal in den Fahrgastraum eingeführt wird. Der Heizluftkanal ist damit vom Kaltluftkanal abgetrennt. Für verschiedene Klimazonen sind unterschiedliche Volumenströme für Heizluft und Kühlluft notwendig. Dies ist für ein Fahrzeug problematisch, das in verschiedenen Klimaabereichen betrieben werden soll, da sich in bestimmten Klimazonen noch höhere Luftgeschwindigkeiten einstellen würden.

Die Druckschrift DE 101 49 594 A1 befasst sich mit der zuvor beschriebenen Problematik und sieht für die Klimakanäle eine möglichst große Ausbildung der Querschnitte vor, wobei den Klimakanälen zusätzlich statische Funktionen zugeordnet sind und damit Bauraum für tragende Elemente eingespart ist. Bei Aufteilung des Querschnittes in zwei feste Bereiche ist jedoch die Querschnittsnutzung festgelegt und ermöglicht so bei Nichtnutzung eines Teilkanals nicht die optimalen Strömungsgeschwindigkeiten.

Der Erfindung liegt die Aufgabe zugrunde, die aufgezeigten Nachteile des Standes der Technik zu beseitigen, also insbesondere ein Luftkanalsystem auf möglichst einfache Weise zu schaffen, welches bei Aufteilung des Dachluftkanals in getrennte Querschnitte für Warmluft und Kaltluft zu optimalen Strömungsgeschwindigkeiten für variable Volumenströme der Warm- und Kaltluft bei geringer Geräuschentwicklung führt. Dabei soll der Platzbedarf des Luftkanalsystems im Hinblick auf die bei Fahrzeugen stets knappen Einbauräume möglichst gering sein.

Diese Aufgabe wird erfindungsgemäß durch ein Luftkanalsystem mit den Kennzeichenmerkmalen des Patentanspruchs 1 gelöst. Nach dem Prinzip der Erfindung sind der Teil-Luftkanal für Warmluft und der Teil-Luftkanal für Kaltluft variabel voneinander getrennt. Die dazu vorgesehene entweder verformbar ausgebildete oder bewegbar gehaltene Abtrennung vergrößert durch die Luftdruck- und Volumenstromverhältnisse des beaufschlagten Teil-Luftkanals den vorhandenen Querschnitt dieses beaufschlagten Kanals durch Eindrücken in den nicht beaufschlagten Teil-Luftkanal. Dies geschieht ohne zusätzliche Hilfsenergie.

Die Vorteile der Erfindung liegen insbesondere darin, dass der Querschnitt des beaufschlagten Teil-Luftkanals sozusagen automatisch und ohne Zuführung von Hilfsenergie vergrößert wird. Dadurch sinken die Strömungsgeschwindigkeit und die Geräuschentwicklung. Somit ist es beispielsweise möglich, den gleichen Kanalquerschnitt bei Fahrzeugen für verschiedene Klimazonen einzusetzen, für die an sich größere Querschnitte der Kanäle für Warmluft und Kaltluft notwendig wären oder aber größere Strömungsgeschwindigkeiten und stärkere Geräuschentwicklungen hingenommen werden müssten. Dadurch sinken die Kosten für Konstruktion, Montage und Logistik, wobei überdies alle Anforderungen von Kunden flexibel erfüllt werden können.

Vorteilhafte Ausgestaltungen und Weiterbildungen der Erfindung sind in den Unteransprüchen angegeben.

Nachfolgend wird die Erfindung anhand von zwei Ausführungsbeispielen näher beschrieben, die in der Zeichnung jeweils prinzipartig dargestellt sind.

Fig. 1 zeigt ein Luftkanalsystem, bei dem überwiegend Textilien verwendet werden, im Längsschnitt. In den Fig. 2 und 3 ist das Luftkanalsystem nach Fig. 1 jeweils im Querschnitt dargestellt.

Fig. 4 zeigt ein Luftkanalsystem, bei dem überwiegend Bleche verwendet werden, im Längsschnitt. Bei den Fig. 5 und 6 handelt es sich um ergänzende Querschnitte zu Fig. 4.

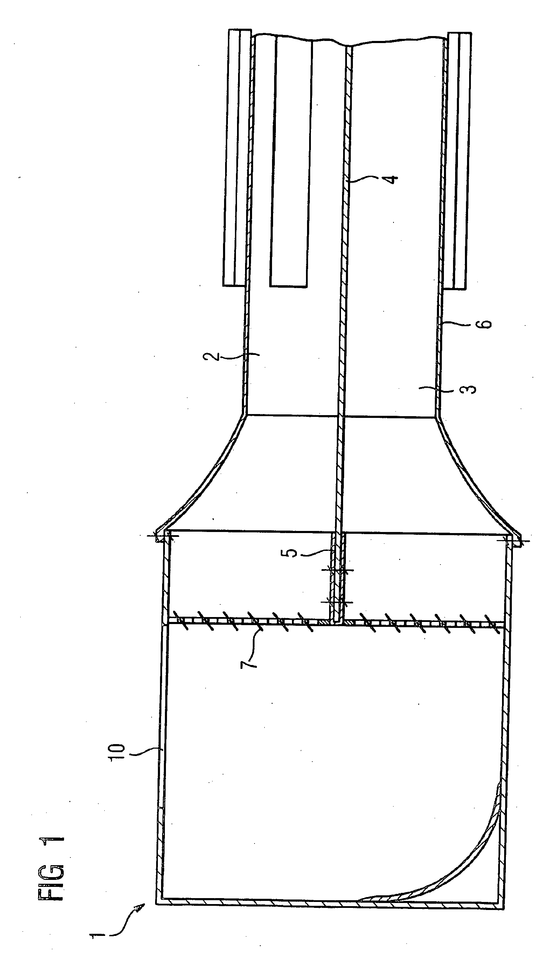

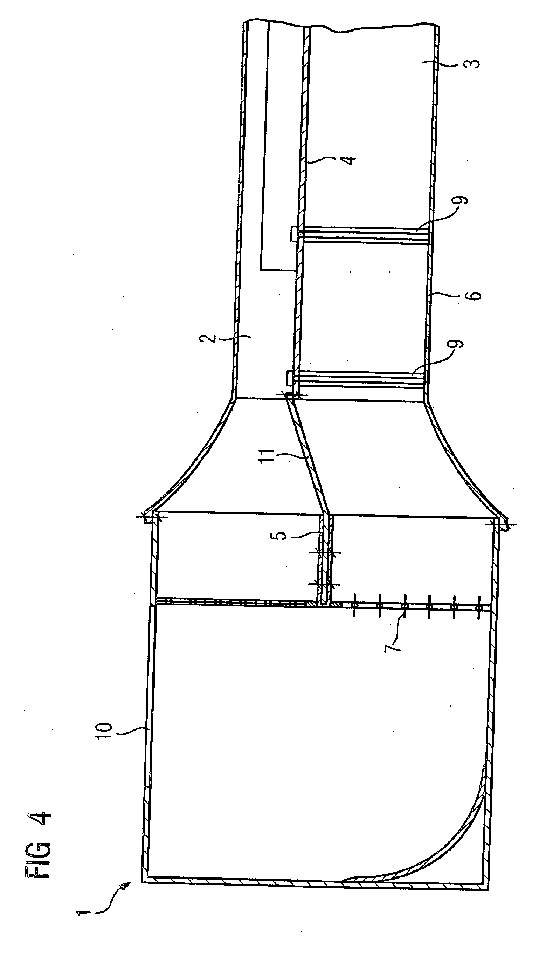

Die Zuluft wird von einer hier nicht dargestellten Klimatisierungseinrichtung ausgeblasen und soll über ein im Dachbereich des Fahrzeugs angeordnetes Luftkanalsystem in den Fahrgastraum gelangen. Gemäß Fig. 1 und Fig. 4 wird dazu diese Luft zunächst über einen Lufteinlass 10 einem Dachlüftungskanal 1 zugeführt und durch verstellbare Klappen 7 in einen Teil-Lüftungskanal 2 für Warmluft und/oder in einen Teil-Lüftungskanal 3 für Kaltluft geleitet. Fig. 1 veranschaulicht die Möglichkeit, die Klappen 7 so einzustellen, dass beide Teil-Lüftungskanäle 2 und 3 mit Luft versorgt werden. Im Ausführungsbeispiel nach Fig. 4 sind die Klappen 7 so eingestellt, dass sie den gewählten Teil-Lüftungskanal 3 für Kaltluft freigeben und den nicht beaufschlagten Teil-Lüftungskanal 2 für Warmluft verschließen.

Das Luftkanalsystem nach den Fig. 1, 2 und 3 enthält innen eine verformbare Abtrennung 4, die als luftdichte Textiltrennwand ausgeführt ist. Diese Abtrennung 4 durchzieht den gesamten Dachlüftungskanal 1 und ist an einer festen inneren Trennwand 5 befestigt, die einfach aus einem Blech gebildet sein kann. Außerdem ist die innere Textil-Abtrennung 4 an den Seitenrändern eines zum Dachlüftungskanal 1 gehörenden äußeren Kanals 6 befestigt, der ebenfalls durch Textilbahnen gebildet sein kann und Luftauslässe 8 aufweist. In diesem Falle ist eine Verbindung der Textil-Abtrennung 4 mit dem äußeren Kanal 6 über Nähte oder über Quetschverbindungen erreichbar. Es empfiehlt sich, den äußeren Textil-Kanal 6 und die Textil-Abtrennung 4 mit Reißverschlüssen 12 zu versehen, die eine leichte Zugänglichkeit für Reinigungszwecke ermöglichen. Durch oberhalb der Reißverschlüsse 12 angenähte Streifen können diese selbst vor Verschmutzungen geschützt werden.

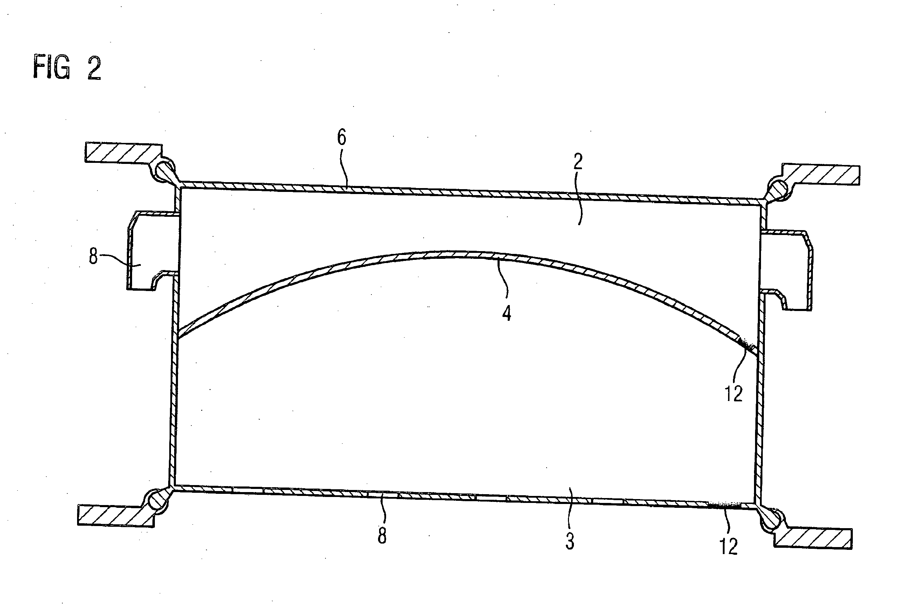

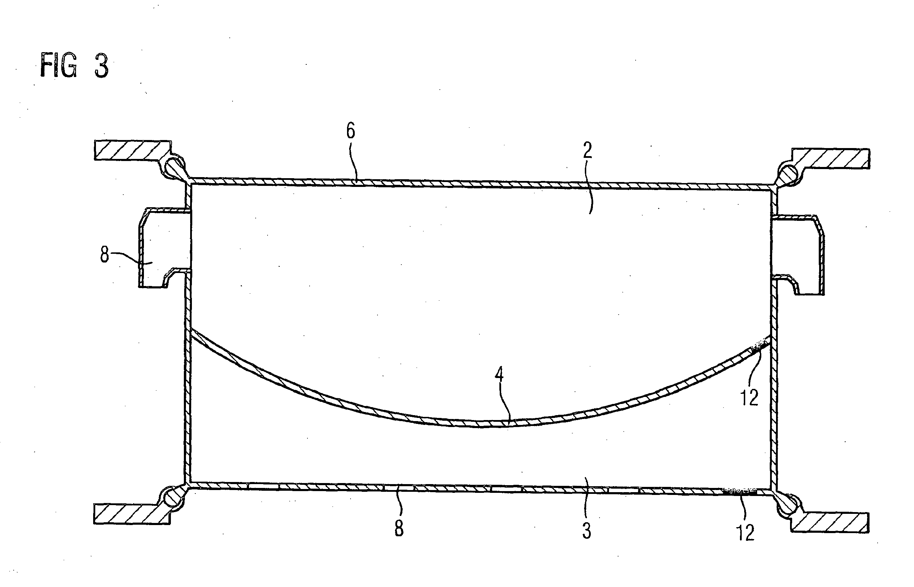

Die Luftdruck- und Volumenstromverhältnisse bewirken durch den entstehenden Druckunterschied eine Verformung der inneren Textil-Abtrennung 4, wodurch der Querschnitt eines Teil-Lüftungskanals 2 oder 3 unter Verkleinerung des anderen Teil-Lüftungskanals 3 bzw. 2 vergrößert wird. Die Textil-Abtrennung 4 wird also in den nicht mit Luft beaufschlagten Teil-Lüftungskanal 2 oder 3 hinein verformt, wie dies aus den Fig. 2 und 3 ersichtlich ist.

Das in den Fig. 4, 5 und 6 gezeigte Luftkanalsystem hat unterschiedlich zu dem vorher Beschriebenen einen aus Blechen oder anderen formstabilen Werkstoffen gebildeten äußeren Kanal 6 und eine innere Abtrennung 4, die plattenförmig ausgebildet und nicht verformbar ist. Diese Abtrennung 4 kann ebenfalls aus einem Blech bestehen. Die Blech-Abtrennung 4 ist durch Führungen 9 gegenüber dem äußeren Kanal 6 vertikal beweglich angeordnet und in ihrer horizontalen Position gehalten. Die Abdichtung der Blech-Abtrennung 4 zum äußeren Kanal 6 hin geschieht z. B. über Gummidichtungen. Eine bewegliche Abtrennung 11 aus einem verformbaren Material (wie Textil, Gummi oder Leder) ist einerseits an der festen inneren Trennwand 5 und andererseits an der Blech-Abtrennung 4 befestigt. Die bewegliche Abtrennung 11 schafft somit den Übergang von der festen inneren Trennwand 5 zu der vertikal beweglichen Blech-Abtrennung 4 und folgt deren Bewegungen. Die Abdichtung der beweglichen Abtrennung 11 zum äußeren Kanal 6 wird insbesondere durch die Eigensteifigkeit der beweglichen Abtrennung 11 erreicht, die deren Verformung verhindert. Als Unterstützung können in die Abtrennung 11 Stäbe aus Metall oder Kunststoff eingelegt sein.

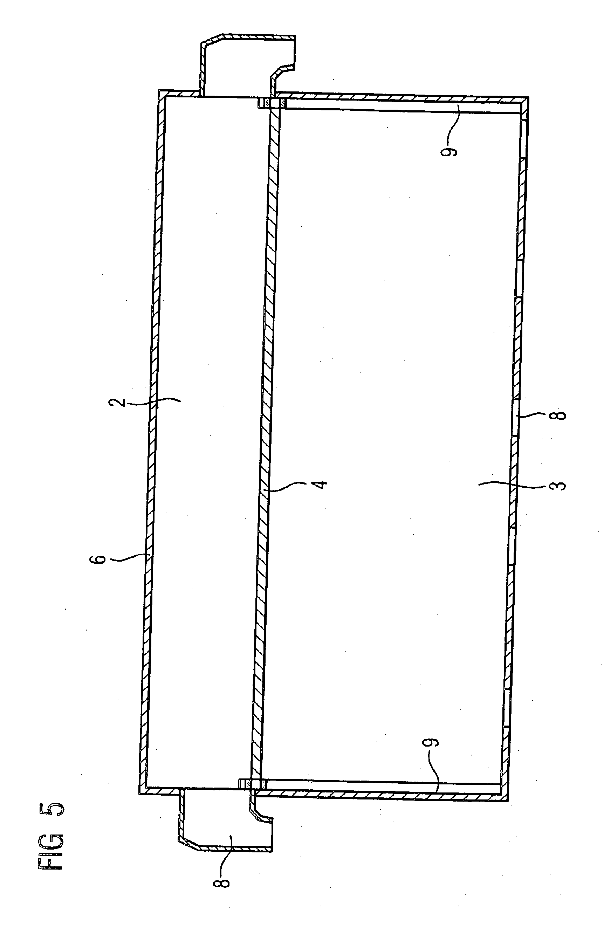

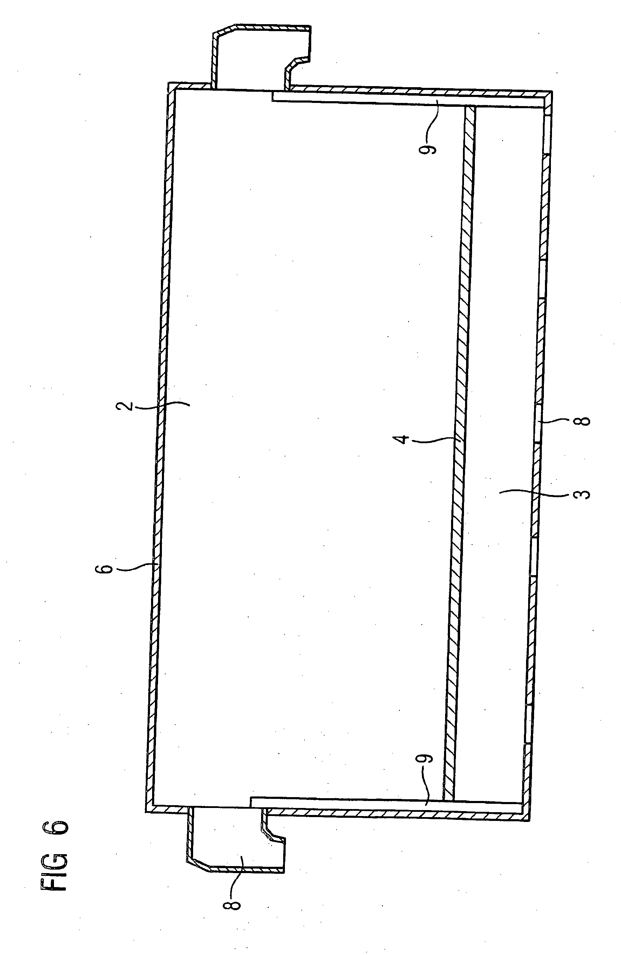

Die Blech-Abtrennung 4 wird über die Druckverhältnisse und die Volumenstromverhältnisse zwischen den beiden Teil-Lüftungskanälen 2 und 3 in den nicht beaufschlagten Teil-Lüftungskanal verschoben und vergrößert so den Querschnitt des mit Luft beaufschlagten Teil-Lüftungskanals, wie dies in den Fig. 5 und 6 gezeigt ist.

## Patentansprüche

1. Luftkanalsystem für Fahrzeuge, insbesondere für Schienenfahrzeuge des Personenverkehrs, mit mindestens einem Dachlüftungskanal (1), der einen Teil-Lüftungskanal (2) für Warmluft und einen Teil-Lüftungskanal (3) für Kaltluft aufweist, wobei
eine innerhalb des Dachlüftungskanals (1) angeordnete Abtrennung (4) derart verformbar ausgebildet oder bewegbar gehalten ist, dass der Querschnitt jedes der beiden Teil-Lüftungskanäle (2 oder 3) unter Verkleinerung des jeweils anderen Teil-Lüftungskanals (3 bzw. 2) vergrößerbar ist, wobei diese Querschnittsänderungen frei von Fremdenergie allein durch die Luftdruck- und Volumenstromverhältnisse bewirkt werden, und
dass die Abtrennung (4) in verformbarer Ausbildung als luftdichte Textiltrennwand ausgeführt ist,
wobei die Textiltrennwand (4) an einer festen inneren Trennwand (5) des Dachlüftungskanals (1) befestigt ist und die Textiltrennwand (4) mit einem äußeren Kanal (6) des Dachlüftungskanals (1) verbunden ist, wobei der äußere Kanal (6) aus Textilbahnen besteht,
sowie die Abtrennung (4) in bewegbar gehaltener Ausbildung plattenförmig ausgebildet und nicht verformbar ist sowie durch Führungen (9) gegenüber einem äußeren Kanal (6) des Dachlüftungskanals (1) vertikal beweglich angeordnet und in ihrer horizontalen Position gehalten ist, wobei der äußere Kanal (6) aus Blechen oder anderen formstabilen Werkstoffen gebildet ist.

2. Luftkanalsystem nach Anspruch 1,
**dadurch gekennzeichnet,**
**dass** die Textiltrennwand (4) und/oder der äußere Textil-Kanal (6) jeweils zumindest einen Reißverschluss (12) enthalten.

3. Luftkanalsystem nach Anspruch 1,
**dadurch gekennzeichnet,**
**dass** die plattenförmige Abtrennung (4) aus einem Blech besteht.

4. Luftkanalsystem nach Anspruch 1 oder 3,
**dadurch gekennzeichnet,**
**dass** die plattenförmige Abtrennung (4) mit einer beweglichen Abtrennung (11) aus verformbarem Material verbunden ist, wobei diese bewegliche Abtrennung (11) an einer festen inneren Trennwand (5) des Dachlüftungskanals (1) befestigt ist.

## Claims

1. Air duct system for vehicles, in particular for rail vehicles for passenger traffic, having at least one roof venting duct (1) which has a component venting duct (2) for warm air, and a component venting duct (3) for cold air, wherein a separating means (4) which is arranged inside the roof venting duct (1) is designed so that it can be deformed or is held in a movable fashion in such a way that the cross section of each of the two component venting ducts (2 or 3) can be enlarged by making the respective other component venting duct (3 or 2) smaller, wherein these changes in cross section are brought about solely by the air pressure and volume flow conditions without external energy and that the separating means (4) which is of deformable design is embodied as an airtight textile separating wall wherein the textile separating wall (4) is attached to a fixed, inner separating wall (5) of the roof venting duct (1) and the textile separating wall (4) is connected to an outer duct (6) of the roof venting duct (1), wherein the outer duct (6) is composed of textile webs and the separating means (4) which is held in a movable fashion is of plate shaped design and cannot deform is arranged so as to be vertically movable with respect to an outer duct (6) of the roof venting duct (1) by means of guides (9) and is held in its horizontal position, wherein the outer duct (6) is formed from pieces of sheet metal or other dimensionally stable materials.

2. Air duct system according to Claim 1, **characterized in that** the textile separating wall (4) and/or the outer textile duct (6) each contain at least one zip fastener (12).

3. Air duct system according to Claim 1, **characterized in that** the plate shaped separating means (4) is composed of a piece of sheet metal.

4. Air duct system according to Claim 1 or 3, **characterized in that** the plate shaped separating means (4) is connected to a movable separating means (11) made of deformable material, wherein this movable separating means (11) is attached to a fixed inner separating wall (5) of the roof venting duct (1).

## Revendications

1. Système de conduit de ventilation pour des véhicules, notamment pour des véhicules ferroviaires pour le transport de voyageurs, comprenant au moins un conduit ( 1 ) d'aération du toit, qui a un conduit ( 2 ) d' aération partiel pour de l' air chaud et un conduit ( 3 ) d'aération partiel pour de l'air froid, dans lequel
une séparation ( 4 ) disposée à l'intérieur du conduit ( 1 ) d'aération du toit est déformable ou maintenue mobile, de façon à ce que la section transversale de chacun des conduits ( 2 ou 3 ) d'aération partiels puisse être agrandie avec diminution de l'autre conduit ( 3 ou 2 ) d'aération partiel, ces modifications de section transversale étant provoquées indépendamment d'énergie extérieure seulement par les rapports de pression d'air et de courant en volume et
en ce que la séparation ( 4 ) déformable est réalisée sous la forme d'une cloison textile étanche à l'air,
dans lequel la cloison ( 4 ) textile est fixée à une cloison ( 5 ) intérieure fixe du conduit ( 1 ) d'aération du toit et
la cloison ( 4 ) textile est reliée à un conduit ( 6 ) extérieur du conduit ( 1 ) d'aération du toit, le conduit ( 6 ) extérieur étant en nappes textiles,
ainsi que la séparation ( 4 ) sous forme de plaque est de constitution maintenue mobile et n'est pas déformable et est montée mobile verticalement par des guidages ( 9 ) par rapport à un conduit ( 6 ) extérieur du conduit ( 1 ) d'aération du toit et est maintenue dans sa position horizontale, le conduit ( 6 ) extérieur étant formé de tôles ou d'autres matériaux de forme stable.

2. Système de conduit de ventilation suivant la revendication 1,
**caractérisé**
**en ce que** la séparation ( 4 ) textile et/ou le conduit ( 6 ) extérieur textile comporte respectivement au moins une fermeture ( 12 ) à glissière.

3. Système de conduit de ventilation suivant la revendication 1,
**caractérisé**
**en ce que** la séparation ( 4 ) sous forme de plaque est constituée d'une tôle.

4. Système de conduit de ventilation suivant la revendication 1 à 3,
**caractérisé**
**en ce que** la séparation ( 4 ) sous forme de plaque est reliée à une séparation ( 11 ) mobile en matériau déformable, cette séparation ( 11 ) mobile étant fixée à une cloison ( 5 ) intérieure fixe du conduit ( 1 ) d'aération du toit.
